Europäisches Patentamt

European Patent Office

Office européen des brevets

(11) Veröffentlichungsnummer: **0 509 254 A1**

## EUROPÄISCHE PATENTANMELDUNG

(21) Anmeldenummer: **92104588.6**

(22) Anmeldetag: **17.03.92**

(51) Int. Cl.5: **H02K 7/116**, H02K 11/00,
//E05F15/10,E06B9/68

(30) Priorität: **13.04.91 DE 4112182**

(43) Veröffentlichungstag der Anmeldung:
**21.10.92 Patentblatt 92/43**

(84) Benannte Vertragsstaaten:
**AT DE ES FR GB IT NL**

(71) Anmelder: **Braselmann, Klaus André**
**Deichstrasse 32**
**W-2980 Norden 2(DE)**

(72) Erfinder: **Braselmann, Klaus André**
**Deichstrasse 32**
**W-2980 Norden 2(DE)**

(74) Vertreter: **Patentanwälte Ostriga & Sonnet**
**Stresemannstrasse 6-8 Postfach 20 13 27**
**W-5600 Wuppertal-Barmen(DE)**

(54) **Abschaltvorrichtung für Getriebemotor.**

(57) Dargestellt und beschrieben ist eine Abschaltvorrichtung für den Getriebemotor endlagengesteuerter Einrichtungen wie Rolltore, Rolläden, Ofentüren, Schallschluckhauben, Senk-fenster od. dgl., mittels raumfest angeordneter Schalter und mindestens einem über ein Schalterbetätigungsgetriebe vom motorischen Antrieb abgeleitet bewegten Schalterbetätigungsorgan wie Schaltnocken od. dgl., wobei die Schalter und das Schalterbetätigungsorgan in einem am Getriebemotor angebrachten Schaltkasten angeordnet sind. Um die Abschaltvorrichtung von der Bauart des Getriebes unabhängig auslegen zu können, ist das Schalterbetätigungsgetriebe insgesamt in dem Schaltkasten untergebracht, greift das Antriebsglied des Schalterbetätigungsgetriebes unmittelbar an der Motorwelle oder an der von dieser angetriebenen Getriebeeingangswelle an und lagert das Abtriebsglied des Schalterbetätigungsgetriebes das Schalterbetätigungsorgan. Demzufolge wird nun das Schalterbetätigungsgetriebe in vereinfachter Weise von der Motordrehzal beaufschlagt.

EP 0 509 254 A1

Die Erfindung bezieht sich auf eine Abschalt-vorrichtung für den Getriebemotor endlagengesteu-erter Einrichtungen wie Rolltore, Rolläden, Ofentüren, Schallschluckhauben, Senk-fenster od. dgl., mittels raumfest angeordneter Schalter und mindestens einem über ein Schalterbetätigungsgetriebe vom motorischen Antrieb abgeleitet bewegten Schalterbetätigungsorgan wie Schaltnocken od. dgl., wobei die Schalter und das Schalterbetätigungsorgan in einem am Getriebemotor angebrachten Schaltkasten angeordnet sind. Als weitere Anwendungsgebiete kommen u.a. auch Antriebsabschaltungen für Jalousien, Rollgitter, Tore aller Art, insbesondere Schiebe-, Senk- und Schwingtore, Kleinaufzüge u.dgl. in Betracht.

Die DE-PS 36 36 626 z.B. offenbart eine elektromotorische Antriebsvorrichtung für insbesondere Rolltore, Rollvorhänge od.dgl., bei der ein Getriebemotor (Elektromotor mit Getriebe) die Antriebseinheit bildet. Dabei sitzt auf der mit der Motorwelle drehfest verbundenen Getriebeeingangswelle eine Schnecke, die mit einem Schneckenrad kämmt, welches mit der Getriebeabtriebswelle verbunden ist. Am Getriebekasten ist ein Schaltkasten angebracht, beispielsweise angenietet, der ortsfest angeordnete Mikroschalter und relativ zu ihnen bewegte Schalterbetätigungsorgane besitzt. Diese sind als auf einer Gewindespindel längsverstellbare Wandermuttern ausgebildet, wobei die Gewindespindel mit einer Schnecke an einem zweiten Schneckenrad des Getriebes des Getriebemotors angreift.

Solche Anordnungen von Schaltkästen und Abschaltvorrichtungen sind in weitem Umfange gebräuchlich. Ihre Auslegung und Anbringung setzt voraus, daß die Getriebe der Getriebemotoren insoweit an die Abschaltvorrichtungen angepaßt sein müssen, als sie die Antriebsmittel für das Schalter-betätigungsgetriebe teilweise ausbilden bzw. auf-nehmen. Im Prinzip müssen also jedes Schalterbetätigungsgetriebe an das konkret verwendete Getriebe des Getriebemotors angepaßt sein. Wegen der großen Vielzahl unterschiedlicher Getriebe gibt es deshalb eine mindestens ebenso große Anzahl verschiedenartiger Schalterbetätigungsgetriebe.

Davon ausgehend liegt der Erfindung die Aufgabe zugrunde, eine Abschaltvorrichtung der im Oberbegriff des Anspruches 1 als bekannt vorausgesetzten Art so auszugestalten, daß sie bei baulich einfacher Ausgestaltung von der Getriebebauart von Getriebemotoren unabhängig ist. Auch soll nach Möglichkeit die Abschaltvorrichtung jederzeit nachträglich an einen Getriebemotor angebaut werden können.

Die Erfindung löst diese Aufgabe in erster Linie und im wesentlichen dadurch, daß das Schalterbetätigungsgetriebe insgesamt in dem Schaltkasten untergebracht ist, das Antriebsglied des Schalterbetätigungsgetriebes unmittelbar an der Motorwelle oder an der von dieser angetriebenen Getriebeeingangswelle angreift und das Abtriebsglied des Schalterbetätigungsgetriebes das Schalterbetätigungsorgan lagert.

Der Erfindung zufolge ist das Schalterbetätigungsgetriebe zumindest mittelbar direkt an die Motorwelle angeschlossen, nämlich am Motor an sie selbst oder am Getriebe an die Getriebeeingangswelle, die unmittelbar von der Motorwelle angetrieben wird. In beiden Fällen ist es deshalb lediglich erforderlich, eine Verbindung zwischen dem Antriebsglied des Schalterbetätigungsgetriebes und der Motor- bzw. Getriebeeingangswelle herzustellen. Dies kann auf einfache Weise auch nachträglich geschehen. In jedem Falle aber ist man von dem Getriebe des Getriebemotors unabhängig. Das bedeutet auch eine Unabhängigkeit von dem Übersetzungsverhältnis des Getriebes, da in jedem Falle die Drehzahl der Motorwelle vom Schalterbetätigungsgetriebe abgegriffen bzw. dieses mit der Motordrehzahl an seinem Eingang angetrieben wird.

Das Prinzip der Erfindung ermöglicht einige vorteilhafte und sehr zweckmäßige weitere Ausgestaltungen. Danach kann das Antriebsglied des Schalterbetätigungsgetriebes einen mit der Motor-welle oder der Getriebeeingangswelle steckverbind-baren Wellenzapfen umfassen. Eine derartige Anordnung, bei der in weiterer Ausgestaltung der Wellenzapfen an seinem von der Motorwelle bzw. von der Getriebewelle wegweisenden Ende einen Steckanschluß für eine Handkurbel aufweist, ist insbesondere vorteilhaft zur Anbringung des Schalterbetätigungsgetriebes an der sogenannten "B"-Seite eines Motors. Das ist die Seite, die von dem Getriebe, an dem der Motor angeflanscht ist, wegweist. Hier befindet sich, wie auch im Beispiel der genannten DE-PS 36 36 626 in vielen Fällen eine Aufnahme zum Anstecken einer Handkurbel für Notbetätigung.

Man kann sich sonach die Anordnung etwa so vorstellen, daß man den mit dem Schalterbetäti-gungsgetriebe entsprechend der Erfindung ausge-rüsteten Schaltkasten an die B-Seite des Motors anbringt, so daß die Handkurbel dann an das äußere Wellenende des Schalterbetätigungsgetriebes bei Bedarf ansteckbar ist. Auf diese einfache Weise läßt sich jeder Getriebemotor auch nachträglich noch mit einer Abschaltvorrichtung nach der Erfindung ausrüsten.

Alternativ kann der Schaltkasten mit dem Schalterbetätigungsgetriebe auch auf das dem Motor abgewandte Ende der Getriebeeingangswelle (Schneckenwelle) am Getriebekasten angebracht werden. Es ergibt sich prinzipiell die gleiche Wirkung mit den gleichen Vorteilen, da die Getriebeeingangswelle mit derselben Drehzahl rotiert wie die Motorwelle des an das Getriebe angeflanschten Motors.

Weitere vorteilhafte Ausgestaltungen und zweckmäßige Weiterbildungen sind in den übrigen Unteransprüchen angegeben. Sie ergeben sich auch aus der nachfolgenden Beschreibung eines in der Zeichnung dargestellten, besonders vorteilhaft erscheinenden Ausführungsbeispiels. In der Zeichnung zeigen:

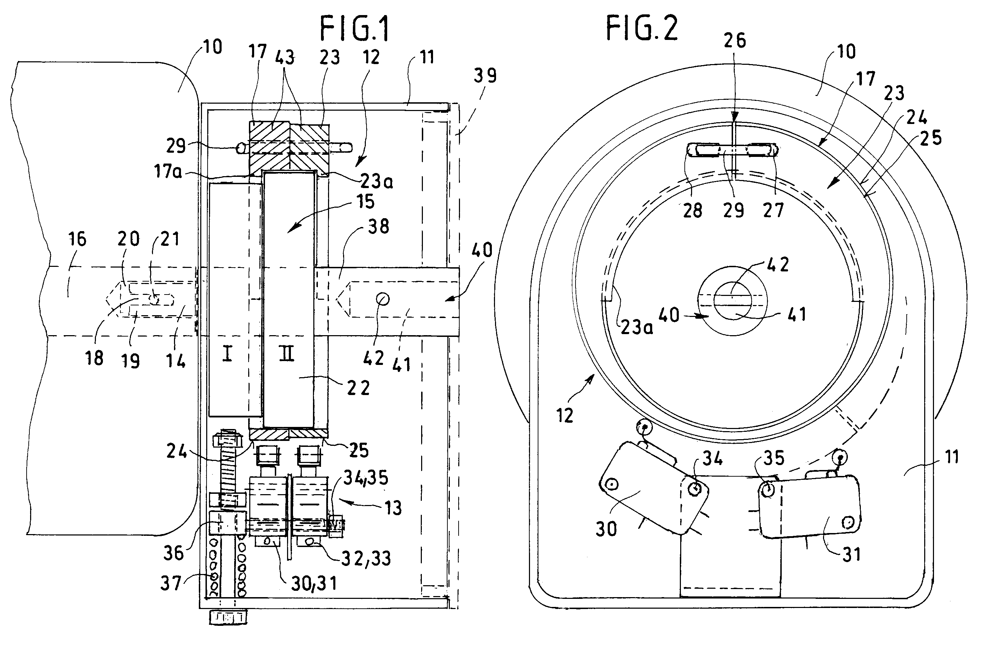

Fig. 1 einen Längsschnitt durch einen an der B-Seite eines Motors angebrachten Schaltkasten sowie

Fig. 2 eine Stirnansicht auf den in Fig. 1 gezeigten Schaltkasten, jedoch ohne den dort gestrichelt eingezeichneten Abschlußdeckel.

Beim dargestellten Ausführungsbeispiel ist an einem Motor 10 z.B. eines Getriebemotors ein Schaltkasten 11 angebracht, der ein Schalterbetätigungsgetriebe 12 sowie eine Schalteranordnung 13 enthält.

Das Schalterbetätigungsgetriebe 12 umfaßt ein Antriebsglied 14 und ein Abtriebsglied 15, wobei das Antriebsglied 14 an der Motorwelle 16 angreift und das Abtriebsglied 15 mindestens eine Schaltscheibe 17 als Schalterbetätigungsorgan 43 lagert.

Das eingangs des Schalterbetätigungsgetriebes 12 vorgesehene Schalterbetätigungsgetriebe-Antriebsglied 14 ist als mit einem Kupplungsschlitz 18 versehener Wellenzapfen 19 ausgebildet und kann in eine Motorwellen-Aufnahme 20 mit Querstift 21 eingesteckt werden, wie zuvor eine Handkurbel mit ihrem Ansteckschenkel, insbesondere also drehfest mit der Motorwelle 16 gekuppelt.

Bei dem beispielhaft und schematisch dargestellten Getriebe 12 handelt es sich um ein sogenanntes Flach- oder Zykloidengetriebe. Beim Ausführungsbeispiel sind zwei Getriebestufen I und II vorgesehen, um eine höhere Untersetzung zu erreichen.

Das Abtriebsglied 15 des Schalterbetätigungsgetriebes 12 besitzt die Form eines Ringes 22, dessen äußere Ringfläche die Schaltscheibe 17 sowie noch eine zweite Schaltscheibe 23 lagert. Die Schaltscheiben 17 und 23 sind aus entgegengesetzten Richtungen des Getriebes 15 axial auf das Abtriebsglied 15 aufgeschoben. Halbkreisförmige, durchmesserverjüngende Anschlagschultern 17a und 23a sichern jede Schaltscheibe 17 bzw. 34 in einer Achsrichtung und beide Schaltscheiben 17 und 23 gemeinsam in beiden Achsrichtungen auf dem Abtriebsglied 15 des Schalterbetätigungsgetriebes 12.

Bei den beiden Steuerscheiben 17 und 23 handelt es sich um ringförmige Exzenterringscheiben, die in Umfangsrichtung deckungsgleich hintereinander liegen, wobei jedoch die Umfangsfläche 24 der Steuerscheibe 23 auf einem etwas kleineren Radius als die Umfangsfläche 25 der Steuerscheibe 17 liegt.

Beide Steuerscheiben 17 und 23 weisen jeweils im Bereich ihres größten Querschnittes einen radial durchgehenden Schlitz 26 auf und sind in diesem Bereich mittels je eines Durchbruchs 27 und 28 in den Endabschnitten durchgreifenden elastischen Spannorgans 29, insbesondere einer Feder, kraftschlüssig zusammengehalten. Dadurch wird jede Schaltscheibe 17, 34 infolge der auf Verkleinerung des Innendurchmessers wirkenden Zugkraft des Spannorgans 29 an die Oberfläche des Abtriebringes 22 des Schalterbetätigungsgetriebes gedrückt. Dank dieser Anordnung ist die Montage der Schaltscheiben 17 und 23 auf dem ringförmigen Getriebe-Abtriebsglied 15 sehr einfach durchzuführen, vor allem aber auch die erforderliche Einstellung der Schaltscheiben 17 und 53 in Umfangsrichtung des Getriebe-Abtriebsrings 22, was zur Justierung der Schaltpunkte wichtig ist.

Die Schalteranordnung 13 besteht aus insgesamt vier Schaltern 30 bis 33, von denen jeweils zwei, in Achsrichtung des Getriebes paarig hintereinander angeordnet, der Steuerscheibe 17 einerseits und der Steuerscheibe 23 andererseits zugeordnet sind. Die beiden der Steuerscheibe 17 zugeordneten Schalter 30 und 31 dienen als Hauptschalter dazu, die beiden Soll-Endlagen der angetriebenen Einrichtung, z.B. die Schließ- und die Offenstellung eines Rolltores, zu schalten. Die beiden anderen Mikroschalter 32 und 33, die der zweiten Schaltscheibe 23 mit ihrer im Umfang etwas kleineren Umfangsfläche 24 zugeordnet sind, dienen als Sicherheitsschalter dazu, eine Notabschaltung für den Fall auszuführen, daß der zugeordnete Hauptschalter 30 oder 31 versagt. In diesem Fall nämlich, wenn also z.B. der Schalter 30 nicht anspricht, dreht sich wegen der dann unterbliebenen Endabschaltung das Steuerscheibenpaar 17, 23 weiter, bis die Umfangsfläche 24 der Steuerscheibe 23 z.B. den dem Schalter 30 zugeordneten Notschalter 32 betätigen kann.

Die erstmalige Justage der Schalteinrichtung kann auf einfache Weise z.B. so vorgenommen werden, daß man die end-lagengesteuerte Einrichtung in ihre Mittellage fährt und die Steuerscheiben 17 und 23 so ausrichtet, daß ihr Schlitz 26 etwa in der Mittelsenkrechten zwischen den beiden Schaltern 30 und 31 liegt. In diesem Falle ist der Drehwinkel zur Betätigung des einen oder des anderen Schalter 30, 31 gleich, lediglich mit unterschiedlichem Drehsinn.

Die Gesamtuntersetzung des Schalterbetätigungsgetriebes 12 muß so eingerichtet sein, daß die Gesamtanzahl der Umdrehungen der Motorwelle 16, die benötigt werden, um eine Einrichtung zwischen ihren beiden zu schaltenden Endlagen zu bewegen, auf die betreffende Schaltscheibe 17 bzw. die Schaltscheiben 17 und 23 so untersetzt wird, daß diese einen Winkelweg beschreiben, der etwas größer ist als der Außen-Umfangswinkel zwischen den zugehörigen Endschaltern 30 und 31, der etwa in der Größenordnung von 250⁰ - 280⁰ liegt. Außerdem ist jeder der Schalter 30 bis 33 selbst noch um eine Schalter-Lagerachse 34 bzw. 35 schwenkjustierbar angeordnet.

Sämtliche vier Schalter 30 bis 33 sind an einem Schalterträger 36 angebracht, der mittels einer Federanordnung 37 im Schaltkasten 11 ausweichbar abgestützt ist. Damit wird ausgeschlossen, daß - insbesondere infolge von Ungeschicklichkeiten während der Justierung - die umlaufenden Schaltscheiben 17 und 23 einen der Schalter zerstören können.

Beim Ausführungsbeispiel ist im übrigen die Anordnung noch so getroffen, daß das Schalterbetätigungsgetriebe-Antriebsglied 14 einen über die Getriebeabtriebsseite hinaus verlängerten Endabschnitt 38 aufweist, der in einem Abschlußdeckel 39 für den Schaltkasten 11 gelagert ist und hier einen mit Steckaufnahme 41 und Querstift 42 versehenen Steckanschluß 40 gleicher Ausführung wie der an der Motorwelle 16 aufweist. Somit stellt das Schalterbetätigungsgetriebe-Antriebsglied 14 insgesamt eine an das Wellenende der Motorwelle 16 ansteckbare Motorwellen-Verlängerung dar. Folglich läßt sich die Motorwelle 16 - wie zuvor ohne Schaltkasten 11 - mittels einer Handkurbel zur Notbetätigung drehen.

Ein wesentlicher Vorteil der anhand des Ausführungsbeispiels geschilderten Erfindung besteht vor allem darin, daß die gesamte Schalteinrichtung, die als solche im Schaltkasten 11 aufgenommen ist, ohne vorherige Zerlegung von Teilen des Motors bzw. Getriebemotors an diesem anbaubar ist. Die Bauart des zusammen mit dem Motor verwendeten Getriebes ist dabei unerheblich, da von der Schalterbetätigungseinrichtung lediglich die Drehzahl der Motorwelle 16 abgegriffen wird, und zwar auch dann, wenn der Schaltkasten gegenüberliegend an dem Getriebe des Gebtriebemotors montiert wird, und das Schalterbetätigungsgetriebe von der mit der Motorwelle umlaufenden Getriebeeingangswelle beaufschlagt wird.

Beim Ausführungsbeispiel wurde ein Schalterbetätigungsorgan 34 in Gestalt der beiden - auch unabhängig voneinander verstellbaren - Schaltscheiben 17 und 23 erläutert. Stattdessen kann auch nur eine einzige Steuerscheibe mit abgestuften Umfangsflächenabschnitten 24 und 25 zur Anwendung gelangen, wobei dann eine der beiden Anschlagschultern 17a oder 23a wegfallen würde.

**Patentansprüche**

1. Abschaltvorrichtung für den Getriebemotor endlagengesteuerter Einrichtungen wie Rolltore, Rolläden, Ofentüren, Schallschluckhauben, Senkfenster od. dgl., mittels raumfest angeordneter Schalter und mindestens einem über ein Schalterbetätigungsgetriebe vom motorischen Antrieb abgeleitet bewegten Schalterbetätigungsorgan wie Schaltnocken od. dgl., wobei die Schalter und das Schalterbetätigungsorgan in einem am Getriebemotor angebrachten Schaltkasten angeordnet sind, dadurch gekennzeichnet, daß das Schalterbetätigungsgetriebe (12) insgesamt in dem Schaltkasten (11) untergebracht ist, das Antriebsglied (14) des Schalterbetätigungsgetriebes (12) unmittelbar an der Motorwelle (16) oder an der von dieser angetriebenen Getriebeeingangswelle angreift und das Abtriebsglied (15) des Schalterbetätigungsgetriebes (12) das Schalterbetätigungsorgan (43) lagert.

2. Vorrichtung nach Anspruch 1, dadurch gekennzeichnet, daß das Antriebsglied (14) des Schalterbetätigungsgetriebes (12) einen mit der Motorwelle (16) oder der Getriebeeingangswelle steckverbindbaren Wellenzapfen (14) umfaßt.

3. Vorrichtung nach Anspruch 2, dadurch gekennzeichnet, daß der Wellenzapfen (14) an seinem von der Motorwelle bzw. von der Getriebewelle wegweisenden Ende einen Steckanschluß (40) für eine Handkurbel aufweist.

4. Vorrichtung nach Anspruch 1, dadurch gekennzeichnet, daß das Schalterbetätigungsorgan (43) als mit dem Getriebe-Abtriebsglied (15) über weniger als 360⁰ Winkelweg umlaufende Steuerscheibe (17) ausgebildet ist.

5. Vorrichtung nach Anspruch 4, dadurch gekennzeichnet, daß die Steuerscheibe (17) als Exzenterscheibe ausgebildet ist und die Schalter (30, 31) in der Umlaufbahn ihrer Umfangsfläche (24) angeordnet sind.

6. Vorrichtung nach Anspruch 1 oder einem der folgenden, dadurch gekennzeichnet, daß die Steuerscheibe (17) auf das ringförmige Getriebe-Abtriebsglied (15) form- und/oder klemmschlüssig aufgesteckt ist.

7. Vorrichtung nach Anspruch 6, dadurch gekennzeichnet, daß die Steuerscheibe (17) einen Radialschlitz (26) aufweist und in dessen Bereich ein die an den Radialschlitz (26) angrenzenden Steuerscheiben-Abschnitte gegeneinander ziehendes elastisches Spannglied (29) aufweist.

8. Vorrichtung nach Anspruch 1 oder einem der folgenden, dadurch gekennzeichnet, daß eine der ersten Steuerscheibe (17) ähnliche zweite Steuerscheibe (23) zur Betätigung von Sicherheitsschaltern (32, 33) vorgesehen ist, die koaxial zu der ersten Steuerscheibe (17), jedoch mit geringfügig versetzter Umfangsfläche (25) auf dem Abtriebsglied (15) des Schalterbetätigungsgetriebes (12) lagert.

9. Vorrichtung nach Anspruch 8, dadurch gekennzeichnet, daß die Umfangsfläche (25) der zweiten Steuerscheibe (23) mit geringfügig kleinerem Radius kongruent zu der ersten Steuerscheibe (17) sowie in Achsrichtung des Schalterbetätigungsgetriebes dicht neben ihr angeordnet ist.

10. Vorrichtung nach Anspruch 1, dadurch gekennzeichnet, daß die Steuerscheiben (17, 23) jeweils mindestens einen Axialanschlag (17a, 23a) zur Aufschubbegrenzung auf das Getriebeabtriebsglied (15) aufweisen.

11. Vorrichtung nach einem der Ansprüche 7 bis 10, dadurch gekennzeichnet, daß beide Steuerscheiben (15, 23) zu einem einstückigen Bauteil vereint sind.

12. Vorrichtung nach Anspruch 1, dadurch gekennzeichnet, daß die Schalter (30, 31, 32, 33) gegenüber der wenigstens einen Steuerscheibe (17) bei Überschreiten einer Kraftschwelle federnd ausweichbar gelagert sind.

13. Vorrichtung nach Anspruch 12, dadurch gekennzeichnet, daß die Schalter (30, 31, 32, 33) an einer gemeinsamen, federnd im Getriebekasten abgestützten Halterung (34 bis 37) montiert sind.

FIG.1

FIG.2

EP 0 509 254 A1

Europäisches
Patentamt

**EUROPÄISCHER RECHERCHENBERICHT**

Nummer der Anmeldung

| | **EINSCHLÄGIGE DOKUMENTE** | | EP 92104588.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | AT - B - 249 798 (STOREN- UND MASCHINENFABRIK EMIL SCHENKER A.-G.) * Seite 1, Zeile 22 - Seite 2, Zeile 20; Fig. 1,2 * -- | 1 | H 02 K 7/116 H 02 K 11/00 //E 05 F 15/10 E 06 B 9/68 |
| X | DE - B - 2 225 980 (CONECTRON KG ELEKTRO- -KLEINMOTOREN UND- AGGREGATEBAU GMBH & CO.) * Ansprüche; Spalte 4, Zeilen 5-60; Fig. 1,2 * -- | 1 | |
| X | US - A - 2 883 634 (ORIGONI et al.) * Spalte 1, Zeilen 15-19; Spalte 2, Zeile 55 - Spalte 5, Zeile 35; Fig. 1-4 * -- | 1 | |
| D,A | DE - C - 3 636 626 (BRASELMANN) * Spalte 3, Zeile 41 - Spalte 4, Zeile 52; Fig. 1-3 * ---- | 1 | **RECHERCHIERTE SACHGEBIETE (Int. Cl.⁵)** H 02 K E 05 F 15/00 E 06 B 9/00 |

Der vorliegende Recherchenbericht wurde für alle Patentansprüche erstellt.

| Recherchenort | Abschlußdatum der Recherche | Prüfer |
|---|---|---|
| WIEN | 22-05-1992 | KUTZELNIGG |